# EUROPEAN PATENT SPECIFICATION

(11) **EP 1 796 889 B1**
(45) Date of publication and mention of the grant of the patent: **16.02.2011**
(21) Application number: 05783785.8
(22) Date of filing: 07.09.2005
(51) Int. Cl.: B29C 45/14, B65D 25/36, B65D 1/02, B29K 23/00

(54) **IN MOLD LABELED INJECTION MOULDED HDPE CONTAINER**
BLASFORMETIKETTIERTER SPRITZGEGOSSENER HDPE-BEHÄLTER
CONTENANT HDPE MOULE PAR INJECTION A ETIQUETAGE DANS LE MOULE

(30) Priority: 07.09.2004 GB 4198529
(43) Date of publication of application: 20.06.2007
(73) Proprietor: Borealis Technology Oy, 06101 Porvoo (FI)
(72) Inventor: Augestad, Morten, 3942 Porsgrunn (NO); Follestad, Arild, 3960 Stathelle (NO)
(74) Representative: Campbell, Neil Boyd
(86) International application number: PCT/EP2005/009603
(87) International publication number: WO 2006/027227

(56) References cited:
- EP-A- 1 384 751
- WO-A-00/71615
- US-A- 4 982 872
- PATENT ABSTRACTS OF JAPAN vol. 1999, no. 13, 30 November 1999 (1999-11-30) & JP 11 226997 A (DAINIPPON PRINTING CO LTD), 24 August 1999 (1999-08-24)
- PATENT ABSTRACTS OF JAPAN vol. 1999, no. 05, 31 May 1999 (1999-05-31) & JP 11 028741 A (DAINIPPON PRINTING CO LTD), 2 February 1999 (1999-02-02)
- PATENT ABSTRACTS OF JAPAN vol. 2000, no. 09, 13 October 2000 (2000-10-13) & JP 2000 177784 A (DAINIPPON PRINTING CO LTD), 27 June 2000 (2000-06-27)
- PATENT ABSTRACTS OF JAPAN vol. 2003, no. 12, 5 December 2003 (2003-12-05) & JP 2005 007647 A (DAINIPPON PRINTING CO LTD), 13 January 2005 (2005-01-13)
- PATENT ABSTRACTS OF JAPAN vol. 2003, no. 12, 5 December 2003 (2003-12-05) & JP 2004 083140 A (DAINIPPON PRINTING CO LTD), 18 March 2004 (2004-03-18)
- PATENT ABSTRACTS OF JAPAN vol. 2003, no. 01, 14 January 2003 (2003-01-14) & JP 2002 251138 A (TOPPAN PRINTING CO LTD), 6 September 2002 (2002-09-06)
- PATENT ABSTRACTS OF JAPAN vol. 2003, no. 11, 5 November 2003 (2003-11-05) & JP 2003 200919 A (DAINIPPON PRINTING CO LTD), 15 July 2003 (2003-07-15)
- PATENT ABSTRACTS OF JAPAN vol. 2003, no. 11, 5 November 2003 (2003-11-05) & JP 2003 181956 A (TOPPAN PRINTING CO LTD), 3 July 2003 (2003-07-03)

## Description

This invention relates to injection moulded articles, in particular to injection moulded polyethylene articles, e.g. bimodal high density polyethylene articles, suitable for packaging solvent based products as well as to processes for the manufacture thereof.

Many aqueous based products such as water-based household paint are typically packaged in polypropylene based containers. Such containers are relatively cheap and simple to make, are light and easy to transport and are strong and potentially recyclable.

Such containers are however, unsuitable for packaging solvent based products and products that cure in the presence of oxygen because polypropylene shows insufficient resistance to solvents and allows oxygen to migrate into the container from the external air. Such containers also fail to sufficiently prevent the egress of solvent, thus allowing the product to deteriorate during storage. Solvent based products such as certain inks, leather tanning products, agricultural pesticides, paints and all kinds of oils etc are therefore conventionally packaged in metal or glass containers.

There remains a need therefore to produce polyolefinic containers for packaging solvent based materials such as paints and for packaging materials which cure in the presence of oxygen which are resistant to solvents and prevent oxygen migration. Such containers must additionally be strong and cheap to manufacture and transport.

The inventors have surprisingly found that a container formed from high density polyethylene (HDPE) and comprising an in mould label can achieve these aims. The HDPE used in the containers of the invention has been found to possess the necessary solvent resistance and by combining this HDPE with an in mould label possessing barrier properties (i.e. a label preventing oxygen migration), a polyolefinic injection moulded article can be formed which may replace the metal or glass containers conventionally employed in the field. Such polyolefinic containers have the additional advantage of being light in comparison to glass or metal containers and are therefore easier to transport and lighter for the end user to carry.

JP11-226997 describes milk containers having an internal in mould label. The container can be made from a variety of polymers including HDPE.

WO00/71615 teaches the use of bimodal HPDE in the manufacture of containers for liquid chemicals.

EP-A-1 384 751 describes container of bimodal HDPE.

Thus, viewed from one aspect the invention provides an injection moulded container comprising an HDPE having a density of 940-980 kg/m3 and comprising at least two polyethylene components having different molecular weight distributions and at least one in mould label wherein said in mould label is an internal in mould label.

Viewed from another aspect the invention provides a process for the preparation of said injection moulded container, said process comprising:
placing an in mould label in an injection mould;
injecting the HDPE having a density of 940-980 kg/m3 into said mould; and
moulding to form said article; wherein the in mould label is placed on the male side of the mould.

The HDPE of the invention should comprise at least two components of differing molecular weight distributions, i.e. the HDPE is multimodal, preferably bimodal. The different components may both be ethylene copolymers or ethylene homopolymers, although preferably at least one of the components is a ethylene copolymer. Preferably the HDPE comprises an ethylene homopolymer and an ethylene copolymer component. Each component should form at least 5 wt%, e.g. at least 15 wt% of the HDPE composition:

Where one of the components is an ethylene homopolymer, this is preferably the component with the lower weight average molecular weight (Mw), e.g. where Mw is 5000 to 100000 D, more preferably 20000 to 40000 D.

By polyethylene is meant a polymer the majority by weight of which derives from ethylene monomer units. Minor comonomer contributions, e.g. up to 20% by weight more preferably up to 10% by weight, may derive from other copolymerizable monomers, generally C₃₋₂₀, especially C₃₋₁₀, comonomers, particularly singly or multiply ethylenically unsaturated comonomers, in particular C₃₋₁₀ α-olefins such as propene, but-1-ene, hex-1-ene, oct-1-ene, 4-methyl-pent-1-ene etc.

It may be noted that the term ethylene copolymer is used herein to relate to a polyethylene deriving from ethylene and one or more such copolymerisable comonomers. Moreover, the polyethylene may contain minor, e.g. up to 10% by weight, preferably up to 5% by weight of other polymers, e.g. other polyolefins in particular polypropylenes, as well as additives such as pigments, nucleating agents, antistatic agents, fillers, antioxidants, etc., generally in amounts of up to 10% by
weight, preferably up to 5% by weight. Preferably therefore, the polymer component of the injection moulded container of the invention comprises at least 90%wt HDPE, especially 95 wt% HDPE.

By HDPE is meant a polyethylene having a density of 940 to 980 kg/m³, preferably greater than 945 kg/m³, especially greater than 950 kg/m³ e.g. 950 to 975 kg/m³, especially 950 to 965 kg/m³.

The HDPE should preferably have a crystallinity of 60 to 90%, preferably 70 to 90%.

HDPE with a density and/or crystallinity in the above ranges show enhanced rigidity, especially in the presence of solvents which may swell and weaken the material.

The HDPE according to the invention is a multimodal polymer, e.g. a bimodal polymer. Such HDPE has been found to provide highly favourable Environmental Stress Crack Resistance (ESCR), as measured, for example, by the bell test or Full Notch Creep Test, as described herein.

By bimodal (or multimodal), it is meant that the polymer consists of at least two fractions (components), one of which has a relatively lower molecular weight and a relatively higher density and another of which has a relatively higher molecular weight and a relatively lower density. Typically the molecular weight distribution (MWD) of a polymer produced in a single polymerization stage using a single monomer mixture, a single polymerization catalyst and a single set of process conditions (i.e. temperature, pressure etc.) will show a single maximum, the breadth of which will depend on catalyst choice, reactor choice, process conditions, etc, i.e. such a polymer will be monomodal.

A multimodal, e.g. bimodal polyethylene may be produced by blending two or more monomodal polyethylenes having differently centred maxima in their MWDs. Alternatively and preferably the multimodal polyethylene may be produced by polymerization using conditions which create a multimodal (e.g. bimodal) polymer product, e.g. using a catalyst system or mixture with two or more different catalytic sites, each site obtained from its own catalytic site precursor using two or more stage polymerisation process with different process conditions in the different stages or zones (e.g. different temperatures, pressures, polymerisation media, hydrogen partial pressures, etc).

Such a multimodal (e.g. bimodal) HDPE may be produced relatively simply by a multistage ethylene polymerization, e.g. using a series of reactors, with optional comonomer addition in only the reactor(s) used for production of the higher/highest molecular weight component(s) or differing comonomers used in each stage. Examples of bimodal PE production and a complete description of HDPE's suitable for use in the invention is given in EP-A-1187876.

If an ethylene homopolymer component is produced by slurry polymerization involving use of recycled diluent, that diluent may contain small amounts of higher α-olefins as contaminants. Likewise where an earlier polymerization stage has produced an ethylene copolymer component, small amounts of comonomer may be carried over to an ethylene homopolymerization stage. Accordingly, by ethylene homopolymer is meant herein a polymer containing at least 99.9% by weight of ethylene units. Likewise as in a multistage/multireactor polymerization using more than one catalyst system, the homopolymerization catalysts may be at least partially active during the copolymerization reaction, any copolymer component making up less than 5% by weight of the total polymer shall not be considered to be the lowest molecular weight component in an HDPE according to the invention.

The copolymer component(s) of the HDPE used according to the invention will generally contain at least 0.1% by weight, preferably at least 0.5% by weight of non-ethylene monomer units, e.g. 0.5 to 6% of such comonomer units. Preferred ethylene copolymers employ alpha -olefins (e.g. C₃₋₁₂ alpha-olefins) as comonomers. Examples of suitable alpha-olefins include but-1-ene, hex-1-ene and oct-1-ene. But-1-ene is an especially preferred comonomer. The polymerization reactions used to produce the HDPE of use in the articles of the invention may involve conventional ethylene homopolymerization or copolymerization reactions, e.g. gas-phase, slurry phase, liquid phase polymerizations, using conventional reactors, e.g. loop reactors, gas phase reactors, batch reactors etc. (see for example WO97/44371 and WO96/18662). The catalyst systems used may likewise be any conventional systems, e.g. chromium catalysts, Ziegler-Natta and metallocene or metallocene:aluminoxane catalysts, either homogeneous or more preferably heterogeneous catalysts, e.g. catalysts supported on inorganic or organic particulates, in particular on magnesium halides or inorganic oxides such as silica, alumina or silica-alumina.

For the preparation of the higher molecular weight component in particular it is especially desirable to use supported Ziegler-Natta catalysts as the molecular weight can then conveniently be controlled using hydrogen. It is also possible to use supported metallocene catalysts as it is particularly straightforward to select desired molecular weights by appropriate selection of particular metallocenes. The metallocenes used will typically be group IVa to VIa metals (in particular Zr or Hf) complexed by optionally substituted cyclopentadienyl groups, e.g. groups carrying pendant or fused substituents optionally linked together by bridging groups. Suitable metallocenes and aluminoxane cocatalysts are widely described in the literature, e.g. the patent publications of Borealis, Hoechst, Exxon, etc.

Typically and preferably however the HDPE will be prepared using multistage polymerization using a single catalyst system or a plurality of catalyst systems, e.g. two or more metallocenes, one or more metallocenes and one or more Ziegler-Natta catalysts, two or more chromium catalysts, one or more chromium catalysts and one or more Ziegler-Natta catalysts, etc. Especially preferably the same catalyst system is used in the different polymerization stages, e.g. a catalyst system as described in EP-A-688794.

The HDPE used to manufacture the containers of the invention preferably has a lower molecular weight component and a higher molecular weight component.

Lower molecular weight component: The lower molecular weight component may have one or more of the following features:
MFR₂ of 10-1000 g/10 min, preferably 50-800 g/10 min, especially 50 to 600 g/10 min measured according to ISO 1133 at 190°C and under 2.16 kg load;
weight average molecular weight of 10-90 kD, preferably 20-80 kD, especially 20 to 70 kD;
preferably a homopolymer or a copolymer with density higher than 965 kg/m³, most preferably a homopolymer;
comprises 10-90% by weight, preferably 35-65% by weight of the total polyethylene in the composition.

Higher molecular weight component: The higher molecular weight component may have one or more of the following features:
weight average molecular weight of 60-500 kD, preferably 100 to 400kD;
comprises 10-90% by weight, preferably 35-65% by weight of the total polyethylene in the composition, i.e. low mw:high mw component weight ratio is 10:90 to 90:10, preferably 35:65 to 65:35.
a homopolymer, or preferably a copolymer, especially with another α-olefin, such as copolymers described herein.

Final polymer composition: The final polymer composition (whether unimodal or multimodal) may have one or more of the following features:
MFR₂ of 0.5-100 g/10 min, preferably 1-50 g/10 min, in particular 2-30 g/10 min (e.g. 5-25 or 2 to 10 g/10 min), measured according to ISO 1133 at 190°C and under 2.16 kg load;
weight average molecular weight of at least 50 kD, e.g. at least 80 kD, preferably 80-200 kD, more preferably 100-180 kD;
molecular weight distribution (ratio of the weight average molecular weight to the number average molecular weight) of 5-60, preferably 8-60, more preferably 14-45;
density of 930-980 kg/m³, preferably 945-975 kg/m³, in particular 950-970 kg/m³;
comonomer content of 0.2-5% by weight, preferably 0.5-3% by weight, more preferably 0.1 to 2.5 wt% as measured by FTIR;
crystalline melting point between 125 and 140°C, as determined by DSC analysis;
crystallinity of 60-85%, more preferably 65-80%, as determined by DSC analysis.

The container of the invention also comprises at least one internal in mould label. Such a label is a film which possesses low levels of oxygen permeability.

In general, in mould labelling involves a process in which precut labels are placed into a mould cavity before the plastic is introduced. During the moulding process, the label and container melts adhere. Thus, in one preferred embodiment, the article of the invention comprises an injection moulded article of HDPE and an internal in mould label.

It is preferred if a single in mould label is employed in the invention although it would be possible to use a number of labels (e.g. one internal label and one external label or two labels covering different portions of the injection moulded container).

The in mould label of use in this invention should possess low levels of oxygen permeability. For example at 23°C/75% Relative humidity and an 80 µm film, the oxygen transmission should be less than 100 cc/m²/day, preferably less than 20 cc/m²/day, more preferably less than 10 cc/m²/day.

Polymers of use in the in-mould labels of the invention include polyethylene terephthalate (PET), , polyvinyl chloride (PVC), polyethylene naphthalate (PEN), polyamide (PA), polyvinyl alcohol (PVAL), ethylene vinyl alcohol (EVOH), propylene vinyl alcohol (PVOH) polyvinylidene chloride (PVDC), acrylic polymers or mixtures thereof. EVOH is a particularly preferred component of in mould labels. These polymers can be combined with other polymers such as polypropylene (PP) and polyethylene (PE) to form labels.

Blends which have been developed and shown to form effective oxygen barriers include EVOH with PP, EVOH with PE, EVOH with PA, PA with PP and PA with PET. PVDC and acrylic polymers are especially suitable as external layers in the in mould label.

Some of the in mould label polymers, e.g. PA, EVOH and PVAL, are more effective when dry and hence when employed in the in mould label of the invention may need to be combined with a water barrier layer. For example, PP is an excellent water vapour barrier and may conveniently be employed along with PA, EVOH to form a film which exhibits both oxygen and water vapour barrier properties. Where PP is employed in the in mould label, it is preferred if this is biaxially orientated.

Moreover, it is possible to metallize the in mould label polymers to improve their oxygen barrier properties. Metallisation is the deposition, in a vacuum chamber, of vaporized molecules of at least one metal (e.g. iron, or particularly aluminium or aluminium alloys)over the surface of a plastic film, thus providing a lustrous metallic appearance. Metallisation is a known process and will be readily carried out by a person skilled in the art.

Other potential films include thin glass-like films formed by coating polymers such as PET, PA or PP with SiOₓ. Such silica coatings can be introduced via physical vapour deposition and are commercialised by Alcan packaging, 4P Ronsberg and Mitsubishi.

Other new barrier technologies may be applicable in the invention claimed, e.g. those commercialised by Ticona (Vectran), Proctor & Gamble (Nodax), Dow (BLOX), Superex Inc. (PET or PA with liquid crystalline polymer) and nanocomposite technology. Laminated labels made from metal foil (e.g. foils of iron, aluminium or alloys) may also be used, as may labels comprising surface modified mica. Such labels provide very effective oxygen and solvent barrier properties.

Preferably however, the in mould label is formed from a multilayer polymeric structure or laminate, e.g. formed from coextrusion by conventional techniques. Such multilayer in mould labels should preferably comprise 2 to 7 layers, e.g. 3 to 5 or 5 to 7 layers. A preferred label comprises external layers compatible with the HDPE which forms the main structure of the article, e.g. the outer layer should comprise PE or PP. The internal layer may thus comprise one of the oxygen barrier materials discussed above, e.g. EVOH. Especially preferred in mould labels are formed from PE-EVOH-PE, PP-EVOH-PP or PP-PVOH-PP optionally comprising one or more adhesive layers. In general, the in mould label should comprise a PVOH or EVOH layer.

The in mould label should preferably be 1 to 200 µm in thickness, e.g. 5 to 120 µm, especially 30 to 100 µm.

The in mould labels of use in this invention can be purchased from Companies such as Vogt, P'Auer, Pachem, Autotype etc.

In mould label technology is well known and conventional techniques may be used to implement its use in the invention, e.g. as described US 4837075.

The article of the invention may be manufactured by placing the in mould label in the injection mould, adding the plastic to the mould and carrying out the moulding process. The in mould label may be placed on the male side of the injection mould. For the injection moulding conventional moulding equipment may be used, e.g. operating at an injection temperature of 19.0 to 275°C and typical pressures, e.g. 500 to 900 bar. Typically containers produced in this fashion will have a volume of 100 mL to 100 L and lids will typically have maximum dimensions of 10 to 600 mm. Container sizes are preferably greater than 100 ml, such as greater than 500 ml, preferably greater than 1 L, especially greater than 10 L.

The in mould label (or labels) can cover at least 50%, e.g. at least 70%, preferably at least 90% of the external surface of the container, e.g. the side or sides of the container and preferably its base. In a most preferred embodiment the label should cover at least 95% e.g. the entire external surface of the injection moulded article, i.e. all external surfaces formed during the injection moulding profess.

According to the invention the in mould label (or labels) is placed on the inside of the container it should still cover at least 50%, e.g. at least 70%, preferably at least 90%, more preferably at least 95 %, especially all of the internal surface of the container.

The person skilled in the art will appreciate that closures or lids are formed separately and may not comprise the in mould label. It is however, preferable if the closure means or lid also comprises an in mould label, preferably the same label as used on the container. This label may be external or internal on the closure means, preferably external.

The injection moulded container of the invention may have one or more of the following preferred features:
ESCR F₅₀ higher than 10 h, preferably higher than 40 h, especially higher than 200 h measured according to ASTM D1693, Condition B;
FNCT higher than 10 h, preferably at least 18 h according to ISO/DIS 16770.3.
Tensile modulus (E-modulus) of at least 100, preferably at least 700, especially at least 900 MPa (measured according to ISO 527-2);
Impact strength of at least 30 kJ/m² (measured according to ISO 8256-A);
Charpy Impact (23°C, v-notch ISO179:2000] of at least 3 kj/m², preferably at least 4 kJ/m², more preferably at least 5 kJ/m².

Oxygen transmission of less than 0.2 ml/package 24h, preferably no more than 0.1 ml/package 24h, more preferably no more than 0.05 ml/package 24h, especailly no more than 0.025 ml/package 24h as measured by the AOIR method of Larsen *et al.* (2000).

In addition, the injection moulded container of the invention exhibits low levels of swell. Many solvents cause swelling accompanied by changes in the physical properties of the container. If the polymer swells too much it will loose mechanical properties e.g. its stiffness (tensile modulus), impact as well as ESCR. The containers of the invention exhibit lower levels of swell than conventional polypropylene articles.

Any suitable material can be packaged using the the containers of the invention, e.g. paints in general. However, the materials to be packaged using the container of the invention preferably comprise organic solvents, i.e. are solvent based materials. Solvents which may be employed in goods to be packaged include alcohols, white spirits, aromatics, xylene, butanol, amines, isocyanates and acetates. Goods to be packaged include paints, leather tanning goods, inks, soaps, adhesives, silicones, sealants, industrial and laboratory chemicals. Preferably the injected moulded article is for solvent based paint, more preferably for solvent based alkyd paint.

In this regard, paints often contain binding agents such as alkyd oils. These compounds may also be cured by oxygen migration through the article wall. It has been surprisingly found that the in mould label employed in this invention also reduces or prevents curing of the binding agent containing paints.

Thus, viewed from another aspect the invention provides a paint container, preferably an oxygen curing binder containing paint container (e.g. an alkyd oil containing paint container), comprising bimodal HPDE having a density of 940 - 980 kg/m³,
and an in mould label.

It is also believed that containers made from the HDPE composition with in mould label will exhibit prevent emission of the volatile solvents within the container, i.e. will possess low volatile organic compound emissions. This forms a further aspect of the invention.

The invention will now be described further by reference to the following non-limiting Examples:

### General

### MFR

For PE, MFR₂ is determined at 190°C using 2.16 kg load according to ISO 1133. For PP measurements are carried out at 230°C.

### Density

Density is determined using ISO 1183/D

### Environmental stress crack resistance (ESCR)

1) Bell test F50 was measured according to ASTM D1693, Cond.B
2) Full notch Creep test (FNCT) was measured according to ISO/DIS 16770.3 at 23°C and 12 MPa stress with a notch depth of 1 mm and specimen dimensions 123mm x 6 mm x 20 mm. The solvent used was 2 vol% Igepal CO-630 in deionized water.

### Tensile properties

Tensile properties were measured on injection moulded samples according to ISO 527-2: 1993. Tensile modulus (E-modulus) was measured at a speed of 1mm/min

### MWD

The weight-average molecular weight Mw and the molecular weight distribution (MWD = Mw/Mn, where Mn equals number average molecular weight and Mw equals to weight average molecular weight) is measured by a method based on ISO 16014-4: 2003. A Waters 150CV plus instrument was used with column 3 x HT &E styragel from Waters (divinylbenzene) and trichlorobenzene (TCB) as solvent at 140°C. The column set was calibrated using universal calibration with narrow MWD PS standards. (The Mark Howings constant K: 9,54*10-5 and a:0,725 for PS, and K: 3,92*10-4 and a:0,725 for PE)

The ratio of Mw and Mn is a measure of the broadness of the distribution, since each is influenced by the opposite end of the "population".

### Charpy impact

This method was applied on injection moulded notched samples according to ISO 179 : 2000. The samples are tested at 23°C and at -20°C.

### Comonomer content

Was determined in a known manner based on FTIR calibrated with 13C NMR.

### Swell

Measured according to ISO/FDIS 16101 (method 1)

### Permeability

Measured according to ISO DYS 16101

### Oxygen transmission (AIOR Method)

Oxygen transmission rate values were measured by the ambient oxygen ingress rate (AOIR) method as described in the paper by Larsen *et al.* (2000).

Larsen, H., Kohier, A. and Magnus, E. M. 2000. Ambient Oxygen Ingress Rate method - an alternative method to Ox-Tran for measuring oxygen transmission rate of whole packages. Packag. Techno/. Sci. 13(6):233-241.

### Example 1

### Reactor Produced Bimodal HDPE suitable for use in the invention

Into a 50 dm³ loop reactor, operated at 80°C and 65 bar, was introduced 1 kg/hour ethylene, 22 kg/hour propane, 2g/hour hydrogen and the polymerization catalyst of Example 3 of EP-B-688794 (loaded on 20 micron silica) in a quantity such that PE production rate was 6.8 kg PE/hour. The MFR₂ and density of the product are estimated at 30 g/10 min and 970 kg/m³ respectively. The slurry was continuously removed from the loop reactor and introduced into a second loop reactor having a volume of 500 dm³ operating at 95°C and 60 bar. Additional ethylene, propane and hydrogen were added so as to produce a polyethylene at 27 kg/hour having MFR₂ 500 g/10 min and density 974 kg/m³. The polymer (still containing the active catalyst) was separated from the reaction medium and transferred to a gas phase reactor where additional hydrogen, ethylene and 1-butene comonomer were added so as to produce a polyethylene at 70 kg/hour having MFR₂ 4 g/10 min and density 953 kg/m³ (denoted sample 3 in Table I). The fraction of high MFR (low MW) material in the total polymer was thus 40%.

Three other samples, denoted I, 2 and 4 in Table **I**, were also produced in this manner.

The properties of samples 1 to 4 are set out in Table 1 below.

**Table 1**

| Samples: | 1 | 2 | 3 | 4 |
|---|---|---|---|---|
| Mw(kD) | 121 | 170 | 102 | 106 |
| Mn (kD) | 4.2 | 4.1 | 7 | 7.4 |
| MWD | 29 | 41 | 14.5 | 14.3 |
| MFR₂ g/10 min | 2.6 | 1.7 | 3.9 | 3.2 |
| Density (kg/m³) | 963 | 956 | 953 | 953 |
| Ratio LMW/HMW | 40/60 | 60/40 | 40/60 | 40/60 |
| ESCR, F50 (hours) | 46 | 86 | 46 | 43 |
| Tensile modulus (kPa) | 1080 | 930 | 880 | 830 |
| Comonomer content | 0.5 | 1.1 | 1.4 | 1.4 |
| wt% | | | | |

### Example 2

The following polymers where used or synthesised:

**Table 2**

| | PP (BE375MO) | HDPE unimodal (MG9641) | HDPE Bimodal (1)* | HDPE Bimodal (II)** |
|---|---|---|---|---|
| MFR2 | 13 | 8 | 3.9 | 7.6 |
| Density | | 964 | 953 | 964 |
| Tensile modulus [mPa] | 1400 | 1190 | 880 | 1090 |
| Charpy impact [kj/m²] 23°C/-20°C | 8.0/4.0 | 6.1/5.0 | | 5.6/3.8 |

| | | | | |
|---|---|---|---|---|
| *Sample 3 from Example 1. Bimodal HDPE II polyethylene composition was produced using the following procedure: | | | | |

Into a 500 dm³ loop reactor, operated at 95 °C and 56 bar, was introduced 34 kg/hour ethylene, 106 kg/hour propane, 28 g/hour hydrogen and the polymerisation catalyst *Lynx 200, a* MgCl₂ supported titanium containing catalyst available from Engelhard Corporation Pasadena, U.S.A., in a quantity such that PE production rate was 34 kg PE/hour.

The polymer (containing the active catalyst) was separated from the reaction medium and transferred to a gas phase reactor, operated at 85 °C and 20 bar, where additional hydrogen, ethylene and 1-butene comonomer were added so as to produce a polyethylene at 50 kg/hour.

The reaction conditions applied are listed in the Table below.

| | | **Bimodal HDPE II** |
|---|---|---|
| **loop reactor** | | |
| Temperature | °C | 95 |
| Pressure | bar | 56 |
| [C₂] | mol% | 1.2 |
| H₂/C₂ ratio | mol/kmol | 197 |
| MFR₂ | g/10min | 40 |
| Density | kg/m³ | > 965 |
| **gas phase reactor** | | |
| temperature | 'C | 85 |
| [C₂] | mol% | 15.2 |
| H₂/C₂ ratio | mol/kmol | 1276 |
| C4/C2 ratio* | mol/kmol | 5 |
| Split | weight% | 60 |

| | | |
|---|---|---|
| * 1-butene comonomer added to the gas phase reactor at a level of 0.02 wt%. | | |

### Example 3

### In Mould Label

The following in mould label was employed.
80 µm PP-EVOH-PP barrier film (Trade name G.S.V.6) obtainable from Vogt with the properties in Table 3:

**Table 3**

| | Test Method | Unit | Value |
|---|---|---|---|
| Haze | ASTM D1003 | | 6 |
| Gloss | ASTM D2457 | | 80 |
| COF | ASTM D1894 | | 0.15-0.30 |
| Impact Strength | ASTM D 1709 | | 80.5 |
| | | | MD TD |
| Tensile at yield | ASTM D882 | N/mm² | 21 21 |
| Tensile at break | ASTM D882 | N/mm² | 30 24 |
| Elong at break | ASTM D882 | (%) | 680 642 |
| Tear str | ASTM D1938 | | 11.0 10.2 |
| O₂ Transmission | ASTM D3985 | cc/m²/day | 5 |
| | 23°C/75%RH | | |
| WVTR | ASTM F 1249 38°C/90%RH | g.m²/day | 4 |

| | | | |
|---|---|---|---|
| (MD=machine direction, TD transverse direction, WVTR is water vapour transmission, COF is coefficient of friction) | | | |

### Injection Moulded Paint Container

The BE375MO and MG9641 (Borealis AS) and polymer sample 3 of Example 1, were injection moulded using the following procedure to give a container.

Injection moulding took place in a 120 t Nestal Syngergy injection moulding machine employing the conditions below. The formed container was rectangular with a capacity of 0.65 L and wall thickness of 1.2 mm. The lid was produced in the same machine using a separate mould. Containers and lids were made using the polymers set out in Table 2 (the PP from Example 2, unimodal PE MG9641 (available from Borealis A/S) and Sample 3 from Example 1).

### Container Injection Moulding conditions:

Temperature: 250°C
Holding Pressure: 500 bar
Holding Time: 3 secs
Cooling time: 5 secs

### Lid Injection Moulding conditions:

Temperature: 250°C
Holding Pressure: 500 bar
Holding Time: 2 secs
Cooling time: 4 secs

An In Mould label was placed manually in the mould for the lid/container prior to plastic Injection. The label employed for both container and lid was the butterfly label available from Vogt with barrier properties of O₂ TR 5cc/m2/day described above.

The label covered 95% of the outer surface of the packaging exposed to the container content.

### Example 4

### Swell test

Injection moulded plastic samples were tested for their resistance for absorption of different solvents according to ISO/FDIS 16101 (Method A) at 40°C for 28 days. The tensile modulus of the exposed samples was also recorded according to ISO 527-1/2

**Table 4**

| Solvent | PP | | PE Unimodal | | PE Bimodal II | |
|---|---|---|---|---|---|---|
| | Tensile Modulus MPa | Swell, wt.% increase | Tensile Modulus MPa | Swell, wt.% increase | Tensile Modulus MPa | Swell, wt.% increase |
| White spirit | 200 | 25 | 480 | 7 | 530 | 6 |
| Xylene | 310 | 26 | 570 | 8 | 530 | 7 |
| | | | | | | |
| Paint with air hardening and xylene thinner | 280 | 21 | 520 | 7 | 600 | 7 |

The samples swell less than the corresponding polypropylene composition.

### Example 5

### Position of In mould Label

The permeability of containers comprising in mould labels on the inside or outside surface of the container to xylene was measured as described in ISO DYS 16101 except that the liquid was not changed after prestorage at 40°C, for containers. In mould labels as described in Example 3 were either placed on the male or female side of the injection mould to yield, after moulding, containers having an in mould label on the inside and outside surface respectively. The labels each covered at least 95 % of their respective surface.

| Xylene | Standard i.e. no in mould label | EVOH in mould label on outside of container | EVOH in mould label on inside of container |
|---|---|---|---|
| MG9641 | | | |
| Storage 40°C start [g] | 465.6 | 472.7 | 470.1 |
| Storage 40°C end [g] | 406.0 | 460.3 | 463.2 |
| Delta weight 40°C 21 days [g] | 59.6 | 12.4 | 6.9 |
| Storage 23°C start [g] | 406.0 | 460.8 | 463.2 |
| Storage 23°C end [g] | 373.2 | 450.7 | 459.3 |
| Delta weight 23°C 28 days [g] | 32.8 | 9.7 | 3.9 |
| Total weight loss 49 days [g] | 92.3 | 22.1 | 10.8 |
| Total weight loss 49 days [wt%] | 19.8 | 4.7 | 2.3 |

### Example 6

ESCR, Full notch Creep test (FNCT) was measured according to ISO/DIS 16770.3 with the solvents as indicated in the table. It was measured at 23°C and 12 MPa stress with a notch depth of 1mm and specimen dimensions 123mm x 6 mm x 20 mm.

| Solvent | Unimodal | Bimodal I |
|---|---|---|
| Igepal CO-630 (2 vol% in deionized water) | 6 | 20 |
| White spirit | 11 | 16 |
| Xylene | 8 | 9 |
| Solvent based paint | 21 | 108 |

### Example 7

### Oxygen Transmission

Oxygen transmission rate values were measured by the ambient oxygen ingress rate (AOIR) method as described in the paper by Larsen *et al.* (2000). AOIR is a method to measure oxygen transmission rate for the whole packaging. The packages were mounted to a combined flushing and sampling port prior to flushing with nitrogen. The first (initial) O₂-concentration in the packages was measured after 1 day of storage at 23 °C and 50% RH. The second (final) O₂ -concentration in the packages was measured after 4 days of storage at the same storage conditions. The O₂-concentration was measured by the use of a specially designed syringe for gas sampling, and the gas sample was injected into a Mocon/Toray oxygen analyser LC-700F (Modem Controls Inc, Minnesota, USA) with a zirconium oxide cell. Additionally, the volume of the packages was registered. The oxygen transmission rate of the packages, given as ml O₂/package/day, was finally calculated according to the equations given by Larsen *et al.* (2000).

Polyethylene from Sample 3 of Example 1 was used to prepare containers wi th no label and containers with an EVOH in mould label covering 95% of the container area. The AOIR for the two sets of containers was measured and the results are shown in the table below.

| | PE - no label | PE-EVOH IML |
|---|---|---|
| Oxygen Transmission rate [ml/pkg 24hr] | 0.25 ± 0.00 | 0.02 ± 0.00 |

A reduction of oxygen transmission of 90% was observed by the inclusion of an in mould label.

Larsen, H., Kohier, A. and Magnus, E. M. 2000. Ambient Oxygen Ingress Rate method - an alternative method to Ox-Tran for measuring oxygen transmission rate of whole packages. Packag. Technol. Sci. 13(6):233-241.

## Claims

1. An injection moulded container comprising an HDPE having a density of 940-980 kg/m³ and comprising at least two polyethylene components having different molecular weight distributions and at least one in mould label wherein said in mould label is an internal in mould label.

2. The container as claimed in claim 1 wherein at least one of said polyethylene components is a polyethylene copolymer.

3. The container as claimed in claim 2 wherein another component is a polyethylene homopolymer.

4. The container as claimed in any one of claims 1 to 3 wherein the HDPE has a density of at least 950 kg/m³.

5. The container as claimed in any one of claims 1 to 4 having an oxygen transmission of less than 0.2 ml/24h as measured by the AOIR method.

6. The container as claimed in any of claims 1 to 5 wherein said in mould label comprises at least one polymeric material selected from the group of polyethylene terephthalate, polyvinyl chloride, polyethylene naphthalate, polyamide, polyvinyl alcohol, ethylene vinyl alcohol, propylene vinyl alcohol, polyvinylidene chloride and acrylic polymers.

7. The container as claimed in any of claims 1 to 6 wherein said in mould label is a multi layered laminate.

8. The container as claimed in any of claims 1 to 7 wherein said in mould label is metallised.

9. The container as claimed in claim any one of claims 1 to 8 wherein the in mould label comprises EVOH.

10. The container as claimed in any of claims 1 to 9 comprising at least one in mould label covering a total of at least 50% of the surface of said article.

11. The container as claimed in any one of claims 1 to 10 containing a solvent based product selected from the group of paints, leather tanning goods, inks, soaps, adhesives, silicones, sealants, industrial and laboratory chemicals or a container containing a product which cures in air.

12. The container as claimed in claim 11 wherein said product comprises at least one solvent selected from the group of alcohols, white spirits, aromatics, xylene, butanol, amines, isocyanates and acetates.

13. Use of the container as claimed in any of claims 1 to 10 as a paint container.

14. Use as claimed in claim 13 wherein said container contains solvent based paint.

15. A process for the preparation of an injection moulded container, said process comprising:
placing an in mould label in an injection mould;
injecting a HDPE having a density of 940-980 kg/m³ and comprising at least two polyethylene components having different molecular weight distributions into said mould; and
moulding to form said article; wherein the in mould label is placed on the male side of the mould.

## Patentansprüche

1. Spritzgußbehälter, umfassend ein HDPE mit einer Dichte von 940 bis 980 kg/m³ und umfassend zumindest zwei Polyethylenkomponenten mit unterschiedlicher Molekulargewichtsverteilung und zumindest ein hinterspritztes Etikett, wobei dieses hinterspritzte Etikett ein internes hinterspritztes Etikett ist.

2. Behälter nach Anspruch 1, wobei zumindest eine der Polyethylenkomponenten ein Polyethylencopolymer ist.

3. Behälter nach Anspruch 2, wobei eine andere Komponente ein Polyethylenhomopolymer ist.

4. Behälter nach einem der Ansprüche 1 bis 3, wobei das HDPE eine Dichte von mindestens 950 kg/m³ aufweist.

5. Behältern nach einem der Ansprüche 1 bis 4 mit einer Sauerstoffdurchlässigkeit von weniger als 0,2 ml/24 h, und zwar nach dem AOIR-Verfahren gemessen.

6. Behälter nach einem der Ansprüche 1 bis 5, wobei das hinterspritzte Etikett zumindest ein Polymermaterial umfaßt, das aus der Gruppe von Polyethylenterephthalat, Polyvinylchlorid, Polyethylennaphthalat, Polyamid, Polyvinylalkohol, Ethylenvinylalkohol, Propylenvinylalkohol, Polyvinylidenchlorid und Acrylpolymeren ausgewählt ist.

7. Behälter nach einem der Ansprüche 1 bis 6, wobei das hinterspritzte Etikett ein mehrschichtiges Laminat ist.

8. Behälter nach einem der Ansprüche 1 bis 7, wobei das hinterspritzte Etikett metallisiert ist.

9. Behälter nach einem der Ansprüche 1 bis 8, wobei das hinterspritzte Etikett EVOH umfaßt.

10. Behälter nach einem der Ansprüche 1 bis 9, der zumindest ein hinterspritztes Etikett umfaßt, das insgesamt mindestens 50 % der Oberfläche des Gegenstandes bedeckt.

11. Behälter nach einem der Ansprüche 1 bis 10, der ein auf Lösungsmittel basierendes Produkt enthält, das aus der Gruppe von Farben, Ledergerbprodukten, Tinten, Seifen, Klebemitteln, Siliconen, Dichtungsmitteln, Industrie- und Laborchemikalien ausgewählt ist, oder Behälter, der ein Produkt enthält, das in Luft aushärtet.

12. Behälter nach Anspruch 11, wobei das Produkt zumindest ein Lösungsmittel umfaßt, das aus der Gruppe von Alkoholen, Testbenzinen, Aromaten, Xylol, Butanol, Aminen, Isocyanaten und Acetaten ausgewählt ist.

13. Verwendung des Behälters nach einem der Ansprüche 1 bis 10 als Farbbehälter.

14. Verwendung nach Anspruch 13, wobei der Behälter eine Farbe auf Lösungsmittelbasis enthält.

15. Verfahren zum Herstellen eines Spritzgußbehälters, wobei das Verfahren folgendes aufweist:
Anordnen eines Etiketts für das Hinterspritzen in einer Spritzgießform;
Einspritzen eines HDPE, das eine Dichte von 940 bis 980 kg/m³ aufweist und mindestens zwei Polyethylenkomponenten mit unterschiedlicher Molekulargewichtsverteilung umfaßt, in die Form; und
Formen, so daß der Gegenstand entsteht; wobei sich das hinterspritzte Etikett auf der Außenseite der Form befindet.

## Revendications

1. Récipient moulé par injection comprenant un HDPE possédant une densité de 940 à 980 kg/cm³ et comprenant au moins deux composants polyéthylène possédant différentes distributions de poids moléculaire et au moins une étiquette surmoulée, ladite étiquette surmoulée étant une étiquette surmoulée interne.

2. Récipient selon la revendication 1, dans lequel au moins un desdits composants polyéthylène est un copolymère de polyéthylène.

3. Récipient selon la revendication 2, dans lequel l'autre composant est un homopolymère de polyéthylène.

4. Récipient selon l'une quelconque des revendications 1 à 3, dans lequel l'HDPE possède une densité d'au moins 950 kg/m³.

5. Récipient selon l'une quelconque des revendications 1 à 4, possédant une transmission d'oxygène inférieure à 0,2 ml/24 heures, comme mesurée par la méthode AOIR.

6. Récipient selon l'une quelconque des revendications 1 à 5, dans lequel ladite étiquette surmoulée comprend au moins un matériau polymère choisi dans le groupe constitué par un téréphtalate de polyéthylène, un poly(chlorure de vinyle), un naphtalate de polyéthylène, un polyamide, un alcool polyvinylique, un alcool vinylique-éthylène, un alcool vinylique-propylène, un poly(chlorure de vinylidène) et des polymères acryliques.

7. Récipient selon l'une quelconque des revendications 1 à 6, dans lequel ladite étiquette surmoulée est un stratifié multicouche.

8. Récipient selon l'une quelconque des revendications 1 à 7, dans lequel ladite étiquette surmoulée est métallisée.

9. Récipient selon l'une quelconque des revendications 1 à 8, dans lequel ladite étiquette surmoulée comprend de l'EVOH.

10. Récipient selon l'une quelconque des revendications 1 à 9, comprenant au moins une étiquette surmoulée recouvrant au total au moins 50 % de la surface dudit article.

11. Récipient selon l'une quelconque des revendications 1 à 10, contenant un produit à base de solvant choisi dans le groupe constitué par les peintures, les articles de tannage du cuir, les encres, les savons, les adhésifs, les silicones, les enduits d'étanchéité, les produits chimiques industriels et de laboratoire ou un récipient contenant un produit qui durci à l'air.

12. Récipient selon la revendication 11, dans lequel ledit produit comprend au moins un solvant choisi dans le groupe constitué par les alcools, les essences minérales, les composés aromatiques, le xylène, le butanol, les amines, les isocyanates et les acétates.

13. Utilisation d'un récipient selon l'une quelconque des revendications 1 à 10 en tant que récipient pour de la peinture.

14. Utilisation selon la revendication 13, dans laquelle ledit récipient contient une peinture à base de solvant.

15. Procédé de préparation d'un récipient moulé par injection, ledit procédé comprenant :
le placement d'une étiquette surmoulée dans un moule pour injection ;
l'injection d'un HDPE possédant une densité de 940 à 980 kg/m³ et comprenant au moins deux composants polyéthylène possédant différentes distributions de poids moléculaire dans ledit moule ; et
le moulage pour former ledit article ; l'étiquette surmoulée étant placée sur le côté mâle du moule.
